(19) Europäisches Patentamt / European Patent Office / Office européen des brevets

(11) **EP 4 238 740 A1**

(12) **EUROPEAN PATENT APPLICATION**
published in accordance with Art. 153(4) EPC

(43) Date of publication:
**06.09.2023 Bulletin 2023/36**

(21) Application number: **21885668.0**

(22) Date of filing: **26.08.2021**

(51) International Patent Classification (IPC):
**B29C 55/12** (2006.01)      **B65D 65/00** (2006.01)
**C08L 23/10** (2006.01)

(52) Cooperative Patent Classification (CPC):
**B29C 55/12; B65D 65/00; C08L 23/10**

(86) International application number:
**PCT/JP2021/031321**

(87) International publication number:
**WO 2022/091549 (05.05.2022 Gazette 2022/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.10.2020   JP 2020183143**

(71) Applicant: **SUMITOMO CHEMICAL COMPANY,
LIMITED
Tokyo 103-6020 (JP)**

(72) Inventor: **INOUE, Nao
Ichihara-shi, Chiba 299-0195 (JP)**

(74) Representative: **Global IP Europe
Patentanwaltskanzlei
Pfarrstraße 14
80538 München (DE)**

(54) **PROPYLENE POLYMER COMPOSITION, BIAXIALLY STRETCHED FILM AND PACKAGING BAG**

(57)    Provided is a propylene polymer composition that exhibits good uniform stretchability in the TD in the production of a biaxially oriented film and that may be processed into a biaxially oriented film having a relatively low heat shrinkage in the TD and the MD.

The propylene polymer composition includes a propylene polymer and a crystal nucleating agent. The propylene polymer composition has a melt flow rate of 5 g/10 min to 30 g/10 min as measured at a temperature of 230°C under a load of 21.18 N and has an isotactic pentad fraction of 90% or more. The concentration of the crystal nucleating agent is 50 ppm by mass to 5,000 ppm by mass.

**Description**

TECHNICAL FIELD

The present invention relates to a propylene polymer composition including a propylene polymer, a biaxially oriented film including the propylene polymer composition, and a packaging bag including the biaxially oriented film.

BACKGROUND ART

In the related art, films used as, for example, various packaging materials include: a biaxially oriented polyethylene terephthalate film as a base film; and on the base film, a non-oriented polypropylene film or non-oriented polyethylene film as a sealant film. A film having such a configuration may have outstanding features as various packaging bags since the base film has high rigidity and high heat resistance and the sealant film has heat-sealing properties at low temperatures.

There has recently been an increasing demand for recycling of this type of film, and there has been a need of mono-materials. Specifically, a biaxially oriented polypropylene film made of the same type of olefin resin as a sealant film made of an olefin resin, such as polypropylene or polyethylene, is preferably used as a base film.

However, a biaxially oriented polypropylene film shows higher heat shrinkage than a biaxially oriented polyethylene terephthalate film or other films. A film including a biaxially oriented polypropylene film as a base film has a limit to its application.

The film described in Patent Document 1 below has been known as a biaxially oriented polypropylene film with reduced heat shrinkage. Specifically, Patent Document 1 discloses a method for reducing heat shrinkage by forming a biaxially oriented film using a propylene polymer with a high-order structure.

However, the propylene polymer described in Patent Document 1 may show poor uniform stretchability in the transverse direction (hereinafter also referred to as "TD") crossing the machine direction (hereinafter also referred to as "MD") in the production of a biaxially oriented film and may cause thickness unevenness or breakage during stretching, which leads to poor stretch formability. Also, it cannot be said that the resulting biaxially oriented film has sufficiently low heat shrinkage in the TD and the MD.

The film described in Patent Document 2 below has been known as a biaxially oriented polypropylene film with improved stretch formability. Specifically, Patent Document 2 discloses a method for improving stretch formability by forming a biaxially oriented film using a propylene polymer composition containing a propylene polymer and a crystal nucleating agent.

However, it cannot be said that a biaxially oriented film obtained from the propylene polymer composition described in Patent Document 2 has sufficiently low heat shrinkage in the TD and the MD.

PRIOR ART DOCUMENTS

PATENT DOCUMENTS

Patent Document 1: WO 2015/012324
Patent Document 2: JP-A-08-291236

SUMMARY OF THE INVENTION

PROBLEMS TO BE SOLVED BY THE INVENTION

The present invention is directed to a propylene polymer composition that exhibits good uniform stretchability in the TD in the production of a biaxially oriented film and that may be processed into a biaxially oriented film having a relatively low heat shrinkage in the TD and the MD, a biaxially oriented film including the propylene polymer composition, and a packaging bag including the biaxially oriented film.

MEANS FOR SOLVING THE PROBLEMS

A propylene polymer composition according to the present invention includes:

a propylene polymer and a crystal nucleating agent,

wherein the propylene polymer composition has a melt flow rate of 5 g/10 min to 30 g/10 min as measured at a temperature of 230°C under a load of 21.18 N,
the propylene polymer composition has an isotactic pentad fraction of 90% or more, and
a concentration of the crystal nucleating agent is 50 ppm by mass to 5,000 ppm by mass.

A biaxially oriented film according to the present invention includes the propylene polymer composition.
A packaging bag according to the present invention includes the biaxially oriented film.

EFFECT OF THE INVENTION

The present invention can provide a propylene polymer composition that exhibits good uniform stretchability in the TD in the production of a biaxially oriented film and that may be processed into a biaxially oriented film having a relatively low heat shrinkage in the TD and the MD, a biaxially oriented film including the propylene polymer composition, and a packaging bag including the biaxially oriented film.

MODE FOR CARRYING OUT THE INVENTION

The propylene polymer composition according to the present invention contains a propylene polymer and a crystal nucleating agent and is used as a material of biaxially oriented films.

<Propylene Polymer>

A propylene polymer used in the present invention may be, for example, a propylene homopolymer or a propylene random copolymer. The propylene polymer is preferably a propylene homopolymer in order to provide the obtained biaxially oriented film with a relatively low heat shrinkage and relatively high stiffness. When the propylene polymer used in the present invention is a propylene random copolymer, the propylene random copolymer is, for example, a copolymer of propylene and at least one comonomer selected from ethylene and C4 to C20 $\alpha$-olefins.
Examples of C4 to C20 $\alpha$-olefins include 1-butene, 2-methyl-1-propene, 1-pentene, 2-methyl-1-butene, 3-methyl-1-butene, 1-hexene, 2-ethyl-1-butene, 2,3-dimethyl-1-butene, 2-methyl-1-pentene, 3-methyl-1-pentene, 4-methyl-1-pentene, 3,3-dimethyl-1-butene, 1-heptene, methyl-1-hexene, dimethyl-1-pentene, ethyl-1-pentene, trimethyl-1-butene, methylethyl-1-butene, 1-octene, methyl-1-pentene, ethyl-1-hexene, dimethyl-1-hexene, propyl-1-heptene, methylethyl-1-heptene, trimethyl-1-pentene, propyl-1-pentene, diethyl-1-butene, 1-nonene, 1-decene, 1-undecene, and 1-dodecene. The $\alpha$-olefins are preferably 1-butene, 1-pentene, 1-hexene, and 1-octene, more preferably 1-butene.
Examples of the propylene random copolymer used as the propylene polymer in the present invention include a propylene-ethylene random copolymer and a propylene-$\alpha$-olefin random copolymer. Examples of the propylene-$\alpha$-olefin random copolymer include a propylene-1-butene random copolymer, a propylene-1-hexene random copolymer, a propylene-1-octene random copolymer, a propylene-ethylene-1-butene random copolymer, a propylene-ethylene-1-hexene random copolymer, and a propylene-ethylene-1-octene random copolymer. The propylene-$\alpha$-olefin random copolymer is preferably a propylene-ethylene random copolymer, a propylene-1-butene random copolymer, or a propylene-ethylene-1-butene random copolymer.
When the propylene random copolymer used as the propylene polymer in the present invention is a propylene-ethylene random copolymer, the ethylene content is preferably 2.0 mass% or less, more preferably 1.0 mass% or less, still more preferably 0.4 mass% or less in order to provide the obtained biaxially oriented film with a relatively low heat shrinkage and relatively high stiffness.
When the propylene random copolymer used as the propylene polymer in the present invention is a propylene-$\alpha$-olefin random copolymer, the $\alpha$-olefin content is preferably 8.0 mass% or less, more preferably 3.0 mass% or less, still more preferably 1.0 mass% or less in order to provide the obtained biaxially oriented film with a relatively low heat shrinkage and relatively high stiffness.
When the propylene random copolymer used as the propylene polymer in the present invention is a propylene-ethylene-$\alpha$-olefin random copolymer, the total content of ethylene and $\alpha$-olefin is preferably 8.0 mass% or less, more preferably 3.0 mass% or less, still more preferably 1.0 mass% or less in order to provide the obtained biaxially oriented film with a relatively low heat shrinkage and relatively high stiffness.
The content of the propylene polymer in the propylene polymer composition is preferably 99.0 mass% to 99.9 mass%, more preferably 99.5 mass% to 99.9 mass%, still more preferably 99.7 mass% to 99.9 mass%.
The cold xylene-soluble fraction (hereinafter abbreviated as CXS) in the propylene polymer used in the present invention is preferably 0.1 mass% to 1.0 mass%, more preferably 0.3 mass% to 1.0 mass%, still more preferably 0.3 mass% to 0.8 mass%. With the CXS in the above range, good stretch processability is obtained, and the resulting biaxially oriented film may show relatively high stiffness and a relatively low shrinkage at relatively high temperatures.

The CXS of the propylene polymer can be controlled in the above range by, for example, selecting the type of external donor used to polymerize propylene. Specific examples of external donors include cyclohexylethyldimethoxysilane, dicyclopentyldimethoxysilane, and di-tert-butyldimethoxysilane.

The CXS in the present invention can be determined by the method described below in [Examples].

The melt flow rate (hereinafter abbreviated as MFR) of the propylene polymer used in the present invention is preferably 5 g/10 min to 30 g/10 min, more preferably 6 g/10 min to 22 g/10 min, still more preferably 6 g/10 min to 15 g/10 min. The use of the propylene polymer having an MFR in the above range allows the propylene polymer composition to have an appropriate viscosity when polypropylene (hereinafter referred to as "PP") is in a molten state and to exhibit good stretch processability and allows the obtained biaxially oriented film to show relatively high stiffness and a relatively low shrinkage at relatively high temperatures. The MFR of the propylene polymer can be controlled in the above range by, for example, adjusting the hydrogen concentration used in the polymerization of propylene to 0.3 mol% to 5.0 mol%.

The MFR in the present invention can be determined by the method described below in [Examples].

The propylene polymer used in the present invention may include multiple propylene polymers having different MFRs. In a preferred example, the propylene polymer may contain a propylene polymer (a) having an MFR of 0.1 g/10 min to 3.0 g/10 min and a propylene polymer (b) having an MFR of 10 g/10 min to 200 g/10 min.

In the propylene polymer composition, the content of the propylene polymer (a) and the content of the propylene polymer (b) relative to the total content of the propylene polymer (a) and the propylene polymer (b) are preferably 50 mass% to 90 mass% and 10 mass% to 50 mass%, respectively, more preferably 50 mass% to 85 mass% and 15 mass% to 50 mass%, respectively. The presence of multiple propylene polymers having different MFRs in the propylene polymer composition according to the present invention reduces thickness unevenness in the stretching process to provide good stretch processability and allows the obtained biaxially oriented film to show relatively high stiffness and a relatively low shrinkage at relatively high temperatures.

The isotactic pentad fraction of the propylene polymer used in the present invention is preferably 90% or more, more preferably 97% or more, still more preferably 98% to 99%. The isotactic pentad fraction of the propylene polymer can be controlled in the above range by, for example, selecting the type of external donor used to polymerize propylene. Specific examples of external donors include cyclohexylethyldimethoxysilane, dicyclopentyldimethoxysilane, and di-tert-butyldimethoxysilane.

The isotactic pentad fraction in the present invention can be determined by the method described below in [Examples].

<Production of Propylene Polymer>

The propylene polymer may be produced by a known polymerization method. Examples of the known polymerization method include a solvent polymerization method in the presence of an inert solvent, a bulk polymerization method in the presence of liquid monomers, and a gas-phase polymerization method substantially in the absence of a liquid medium. A gas-phase polymerization method is preferred. A combination of two or more of the above polymerization methods, a multi-step polymerization method including two or more steps, or other methods may also be used.

In any of the above polymerization methods, catalysts for stereoregular polymerization of propylene can be used as a catalyst for producing the propylene polymer.

Examples of catalysts for stereoregular polymerization of propylene include: a titanium trichloride catalyst; a catalyst including a combination of a solid catalyst component, such as a Ti-Mg catalyst containing titanium, magnesium, halogen, and an electron donor as essential components, an organoaluminum compound, and an optional third component, such as an electron donor compound; and metallocene catalysts. Preferred is a catalyst including a combination of an organoaluminum compound, an electron donor compound, and a solid catalyst component containing magnesium, titanium, halogen, and an electron donor as essential components. Specific examples of catalysts include the catalysts described in JP-A-61-218606, JP-A-61-287904, JP-A-7-216017, and JP-A-2004-182876.

The crystal nucleating agent used in the present invention may be at least one of an α-crystal nucleating agent and a β-crystal nucleating agent (preferably β-crystal nucleating agent).

<α-Crystal Nucleating Agent>

The α-crystal nucleating agent refers to a compound that can form an α-crystal with a monoclinic crystal structure in a propylene polymer.

The α-crystal nucleating agent may be any of various organic α-crystal nucleating agents known in the related art. Examples of organic α-crystal nucleating agents include sorbitol derivatives, such as dibenzylidene sorbitol and dimethylbenzylidene sorbitol; metal salts of aromatic carboxylic acids, such as sodium salts and aluminum salts of aromatic carboxylic acids, such as sodium p-tert-butylbenzoate, sodium β-naphthoenoate, sodium 1,2-cyclohexanedicarboxylate, aluminum dibenzoate, basic aluminum di-p-tert-butylbenzoate; aromatic carboxylic acids; and metal salts of aromatic phosphoric acids, such as sodium 2,2-methylene bis(4,6-di-tert-butylphenyl)phosphate.

Examples of inorganic α-crystal nucleating agents include, but are not limited to, talc and mica. The average particle diameter of inorganic α-crystal nucleating agents is preferably 10 um or less, more preferably 6.0 um or less to prevent poor film appearance caused by fish eyes. The average particle diameter can be determined as specified in JIS Z8825:2013.

<β-Crystal Nucleating Agent>

The β-crystal nucleating agent refers to a compound that can form a β-crystal with a hexagonal crystal structure in a propylene polymer. The β-crystal nucleating agent may be any of various β-crystal nucleating agents known in the related art. Examples of the β-crystal nucleating agent include amide compounds, such as N,N'-dicyclohexyl-2,6-naphthalenedicarboxamide, N,N'-dicyclohexylterephthalamide, and N,N'-diphenylhexanediamide; quinacridones, such as tetraoxaspiro compounds, quinacridones, and quinacridone quinones; iron oxide with a nanoscale size; alkali or alkaline earth metal salts of carboxylic acids, such as calcium pimelate, potassium 1,2-hydroxystearate, magnesium benzoate or magnesium succinate, and magnesium phthalate; aromatic sulfonate compounds, such as sodium benzenesulfonate or sodium naphthalenesulfonate; diesters or triesters of di-or tri-basic carboxylic acids; phthalocyanine pigments, such as phthalocyanine blue; a two-component compound composed of a component A, which is an organic dibasic acid, and a component B, which is an oxide, hydroxide, or salt of a Group IIA metal in the periodic table; and a composition composed of a cyclic phosphorus compound and a magnesium compound. These β-crystal nucleating agents may be used alone or as a mixture of two or more. Among the β-crystal nucleating agents described above, N,N'-dicyclohexyl-2,6-naphthalenedicarboxamide, N,N'-dicyclohexylterephthalamide, and N,N'-diphenylhexanediamide, which are amide compounds, are preferred, and N,N'-dicyclohexyl-2,6-naphthalenedicarboxamide is more preferred.

<Method for Producing Propylene Polymer Composition>

The propylene polymer composition is produced by, for example, melt-kneading the propylene polymer and the crystal nucleating agent described above. In one example method, the propylene polymer and the crystal nucleating agent are mixed in, for example, a ribbon blender, a HENSCHEL mixer, or a tumbler mixer, and the resulting mixture is melt-kneaded in an extruder or other devices. In another method, a masterbatch containing 1 to 10 parts by mass of the crystal nucleating agent relative to 100 parts by mass of the propylene polymer is prepared in advance, and the propylene polymer and the masterbatch of the crystal nucleating agent are appropriately mixed such that the propylene polymer composition contains a predetermined concentration of the crystal nucleating agent. In yet another method using the propylene polymer containing the propylene polymer (a) and the propylene polymer (b), the propylene polymer (a) and the propylene polymer (b) are separately melt-kneaded to form pellets, and the pellets of the propylene polymer (a), the pellets of the propylene polymer (b), and the masterbatch containing the crystal nucleating agent are mixed by the same method as described above and further melt-kneaded by the same method as described above. In yet another method, the pellets of the propylene polymer (a) and the pellets of the propylene polymer (b) prepared as described above are blended by dry blending or other methods, and the blended pellets and the masterbatch containing the crystal nucleating agent are then mixed and melt-kneaded directly in a film processor. In yet another method, the pellets of the propylene polymer (a) and the pellets of the propylene polymer (b) prepared as described above and the masterbatch containing the crystal nucleating agent are separately fed to an extruder in a film processor and mixed, followed by melt kneading.

In mixing the propylene polymer and the crystal nucleating agent, for example, a stabilizer, a lubricant, an antistatic agent, and an anti-blocking agent, and various inorganic or organic fillers may be added as needed.

The MFR of the propylene polymer composition according to the present invention is 5 g/10 min to 30 g/10 min, preferably 6 g/10 min to 22 g/10 min, still more preferably 6 g/10 min to 15 g/10 min.

The CXS of the propylene polymer composition according to the present invention is preferably 0.1 mass% to 1.0 mass%, more preferably 0.3 mass% to 1.0 mass%, still more preferably 0.3 mass% to 0.8 mass%.

The concentration of the crystal nucleating agent in the propylene polymer composition according to the present invention is 50 ppm by mass to 5000 ppm, preferably 100 ppm by mass to 2500 ppm by mass, more preferably 100 ppm by mass to 2000 ppm by mass. In the case of using an α-crystal nucleating agent as the crystal nucleating agent, the concentration of the α-crystal nucleating agent in the propylene polymer composition is preferably 100 ppm by mass to 2500 ppm by mass, more preferably 500 ppm by mass to 1500 ppm by mass. In the case of using a β-crystal nucleating agent as the crystal nucleating agent, the concentration of the β-crystal nucleating agent in the propylene polymer composition is preferably 100 ppm by mass to 1500 ppm by mass, more preferably 100 ppm by mass to 900 ppm by mass.

The MFR of the propylene polymer composition can be controlled in the above range by controlling the MFR of the propylene polymer as described above. The CXS of the propylene polymer composition can be controlled in the above range by controlling the CXS of the propylene polymer as described above.

The propylene polymer composition may satisfy formula (I) below.

$$9 \leq X/Y \leq 40 \qquad (I)$$

(wherein

X represents a melt flow rate measured at a temperature of 230°C under a load of 21.18 N, and
Y represents a cold xylene-soluble fraction)

The propylene polymer composition may satisfy formula (II) below.

$$20 \leq X/Y \leq 30 \qquad (II)$$

(wherein X and Y have the same definitions as described above)

The isotactic pentad fraction of the propylene polymer composition according to the present invention is 90% or more, preferably 97% or more, more preferably 98% to 99%. The isotactic pentad fraction of the propylene polymer composition can be controlled in the above range by controlling the isotactic pentad fraction of the propylene polymer as described above.

The maximum meso-chain length of the propylene polymer in the propylene polymer composition according to the present invention is preferably 80 or more, more preferably 82 or more. The maximum meso-chain length of the propylene polymer is measured by using the propylene polymer composition excluding the crystal nucleating agent. Since a large portion of the measured composition is occupied by the propylene polymer, the measured value of the composition free of the crystal nucleating agent can be assumed to be a measured value of the propylene polymer. The maximum meso-chain length of the propylene polymer can be controlled in the above range by, for example, selecting the type of external donor used to polymerize propylene and/or by adjusting the hydrogen concentration to 0.3 mol% to 5.0 mol%. Specific examples of external donors include cyclohexylethyldimethoxysilane, dicyclopentyldimethoxysilane, and di-tert-butyldimethoxysilane.

The maximum meso-chain length in the present invention can be determined by the SSA method and specifically can be determined by the method described below in [Examples].

With the MFR, the isotactic pentad fraction, and the concentration of the crystal nucleating agent in the above ranges, the propylene polymer composition according to the present invention exhibits good uniform stretchability in the TD in the production of a biaxially oriented film, and the resulting biaxially oriented film has a relatively low heat shrinkage in the MD and TD.

Specifically, the thermal shrinkage of the biaxially oriented film may occur due to orientation of tie molecules (amorphous molecular chains between crystallites) of PP in the propylene polymer composition.

The MFR of the propylene polymer composition is a measure of the molecular weight of PP. A high MFR, or a short molecular chain of PP, may indicate a small proportion of tie molecules between PP crystallites and a small heat shrinkage in the MD and the TD.

A high MFR (short molecular chain of PP) may result in less entanglement of molecular chains and may easily cause breakage in TD stretching in the production of a biaxially oriented film or may generate a problem of mixture of oriented and non-oriented regions in the TD. If the MFR is as relatively high as 5 g/10 min or higher, the stretching process is difficult in the production of a biaxially oriented film. In the present invention, stretchability is improved by adding a crystal nucleating agent to enable favorable stretching of a propylene polymer composition with high MFR, which has been difficult to stretch. Having an MFR of 5 g/10 min to 30 g/10 min, the propylene polymer composition according to the present invention exhibits a relatively low heat shrinkage in the MD and the TD. Containing a crystal nucleating agent, the propylene polymer composition according to the present invention can be favorably stretched in the production of a biaxially oriented film.

The isotactic pentad fraction is a measure of crystallinity of PP. A high isotactic pentad fraction indicates in high crystallinity of PP and a low amorphous content and thus leads to low heat shrinkage in the MD and the TD.

The crystal nucleating agent may make fine and uniform the PP crystal produced in the formation of a biaxially oriented film to improve uniform stretchability in the TD in the production of a biaxially oriented film. When the concentration of the crystal nucleating agent in the propylene polymer composition is 50 ppm by mass to 5000 ppm by mass, the crystal nucleating agent sufficiently makes the PP crystal fine and uniform, and the stretching failure caused by aggregation of the crystal nucleating agent may be unlikely to occur.

In the case of using a β-crystal nucleating agent as the crystal nucleating agent, stretching at a temperature higher than or equal to the melting point of the β-crystal during stretching in the production of a biaxially oriented film easily causes melting of the β-crystal and thus results in less orientation of amorphous regions because the β-crystal of PP formed by the β-crystal nucleating agent has a lower melting point than the α-crystal of PP formed by the α-crystal nucleating agent. This allows the obtained biaxially oriented film to have a relatively low heat shrinkage in the MD and the TD.

As described above, the propylene polymer composition according to the present invention exhibits good uniform stretchability in the TD in the production of a biaxially oriented film when the MFR is 5 g/10 min to 30 g/10 min, the isotactic pentad fraction is 90% or more, and the concentration of the crystal nucleating agent is 50 ppm by mass to 5000 ppm by mass. In addition, the resulting biaxially oriented film has a relatively low heat shrinkage in the MD and the TD.

With the CXS in the above range, the propylene polymer composition according to the present invention exhibits better uniform stretchability in the TD, and the resulting biaxially oriented film has a lower heat shrinkage in the MD and the TD. The CXS is a measure of crystallinity of PP. A lower CXS indicates higher crystallinity of PP and a smaller proportion of tie molecules (amorphous regions) of PP and thus results in a lower heat shrinkage in the MD and the TD. However, a low CXS may result in excessively high crystallinity of PP and poor uniform stretchability in the TD. Since the uniform stretchability in the TD is affected by both the MFR and CXS of the propylene polymer composition, better uniform stretchability in the TD is obtained with the ratio of the MFR to the CXS in the ranges shown in formula (I) and formula (II) above.

With the maximum meso-chain length of the propylene polymer in the above range, the propylene polymer composition exhibits better uniform stretchability in the TD, and the resulting biaxially oriented film has a lower heat shrinkage in the MD and the TD.

<Production of Biaxially Oriented Film>

Next, a method for producing a biaxially oriented film by using the propylene polymer composition according to the present invention will be described. Examples of the method for producing a biaxially oriented film include a sequential biaxial stretching process and a simultaneous biaxial stretching process.

A sequential biaxial stretching process may include: a step of heat-melting the propylene polymer composition in an extruder and extruding the molten composition from a T-die onto a cooling roll to cool and solidify the extruded composition in a sheet shape and thus to form a non-oriented sheet; a step of stretching the obtained non-oriented sheet 3 to 12 times in the MD by using a series of stretching rolls to form a uniaxially oriented film; and a step of, with both ends of the obtained uniaxially oriented film held with two columns of chucks arranged in the MD, stretching the obtained uniaxially oriented film 4 to 20 times in the TD in a heating furnace including a preheating unit, a stretching unit, and a heat treatment unit and then relaxing the film 5% to 30% in the TD by narrowing the distance between the two columns of chucks to produce a biaxially oriented film. The sequential biaxial stretching process may include a step of a corona treatment or other treatments as needed.

In the sequential biaxial stretching process, the temperature in the heat-melting of the propylene polymer composition is preferably, for example, 230°C to 290°C. The temperature of the cooling roll is preferably, for example, 10°C to 60°C. The temperature of the stretching rolls in stretching the non-oriented sheet in the MD is, for example, preferably 110°C to 165°C, more preferably 110°C to 150°C. The heating temperature in stretching the uniaxially oriented film in the TD is preferably 150°C to 200°C, and the heating temperature in relaxing the film is preferably 150°C to 200°C.

A simultaneous biaxial stretching process may include: a step of heat-melting the propylene polymer composition in an extruder and extruding the molten composition from a T-die onto a cooling roll to cool and solidify the extruded composition in a sheet shape and thus to form a non-oriented sheet; a step of, with both ends of the obtained non-oriented sheet held with two columns of chucks arranged in the MD, stretching the non-oriented sheet 3 to 12 times in the MD and 4 to 20 times in the TD at the same time by widening the distance between the two columns of chunks in the TD and the distances between individual chunks in each column in the MD in a heating furnace including a preheating unit, a stretching unit, and a heat treatment unit, and then relaxing the film 5% to 30% in the TD to produce a biaxially oriented film. The sequential biaxial stretching process may include a step of a corona treatment or other treatments as needed.

In the simultaneous biaxial stretching process, the temperature of heat-melting, the temperature of the cooling roll, and the heating temperature during stretching may be the same as the conditions of the sequential biaxial stretching process as described above.

In the sequential biaxial stretching process and the simultaneous biaxial stretching process, a biaxially oriented film having relatively low heat shrinkage and high heat resistance is produced when the relaxation rate in stretching the film is 5% or more (preferably 15% or more) as described above. The film has less thickness unevenness when the relaxation rate is 30% or less (preferably 25% or less) as described above.

The relaxation rate R in the present invention can be determined by formula (1) below.

$$R = (L1 - L2)/L1 \times 100 \qquad (1)$$

(wherein L1 represents a distance between the chucks in the TD before relaxation of the film, and L2 represents a distance between the chucks in the TD after relaxation of the film)

The thickness of the biaxially oriented film formed by using the propylene polymer composition according to the present invention is preferably, for example, 10 um to 70 $\mu$m.

The biaxially oriented film formed by using the propylene polymer composition according to the present invention can be used to form one or more layers of a multilayer film. In the multilayer film, at least one layer is composed of the biaxially oriented film according to the present invention, and any other layer is stacked on the layer of the biaxially oriented film. Examples of any other layer stacked on the layer of the biaxially oriented film include any layer, such as a sealant layer, a gas barrier layer, an adhesive layer, and a printed layer. In particular, a sealant layer composed of an olefin film is preferably stacked on the layer of the biaxially oriented film. The obtained multilayer film having such a configuration can be easily recycled. The multilayer film may be produced by a common method, such as an extrusion lamination method, a heat lamination method, or a dry lamination method.

The biaxially oriented film formed by using the propylene polymer composition according to the present invention can be used as a material of a packaging bag. Specifically, the multilayer film containing the layer of the biaxially oriented film can be used to form a packaging bag. The packaging bag may be used to package any objects, such as food, clothing, and miscellaneous goods.

EXAMPLES

The measured values of the items in Examples and Comparative Examples were obtained by the methods described below.

(1) MFR (unit: g/10 min)

The MFR of the propylene polymer composition was measured at a temperature of 230°C under a load of 21.18 N in accordance with the method A specified in JIS K7210-1:2014.

(2) CXS (unit: mass%)

The propylene polymer composition (1 g) was completely dissolved in 100 ml of boiling xylene, then heated to 20°C, and stirred for 1 hour. The resulting mixture was filtered to separate the precipitate and the solution, and the amounts of components dissolved in the solution were determined by liquid chromatography under the following conditions to obtain the CXS.

Column: SHODEX GPC KF-801
Eluent: tetrahydrofuran
Column oven temperature: 40°C
Sample injection volume: 130 $\mu$L
Flow rate: 1 mL/min
Detector: differential refractometer

(3) Isotactic Pentad Fraction ([mmmm], unit: %)

The [mmmm] of the propylene polymer composition was measured by 13C-NMR under the following conditions. The NMR absorption peaks corresponding to the propylene polymer contained in the propylene polymer composition were assigned in accordance with the method proposed by A. Zambelli et al. (Macromolecules, volume 8, page 687, 1975).

Model: Bruker AVANCE 600
Probe: 10 mm CryoProbe
Measurement temperature: 135°C
Pulse repetition time: 4 seconds
Pulse width: 45°
Number of scans: 256

(4) Maximum Meso-Chain Length (unit: none)

The maximum meso-chain length (MSL) of the propylene polymer was measured in accordance with the successive self-nuculeation and annealing method proposed by A. J. Muller et al. (SSA method, European Polymer Journal, volume 65, page 132, 2015). The measurement conditions are described in (4-1) to (4-4).

(4-1) Measurement of $T_{s,ideal}$ (unit: °C)

By using a differential scanning calorimeter (TA Instruments DSC250), 5 mg of the propylene polymer composition was held at 200°C for 3 minutes and then cooled to 50°C at a cooling rate of 10°C/min in a nitrogen atmosphere. Subsequently, the propylene polymer composition was held at 50°C for 3 minutes and then heated to a predetermined temperature $T_s$ (unit: °C) at a heating rate of 10 °C/min. Subsequently, the propylene polymer composition was held at a temperature $T_s$ for 5 minutes and then cooled to 50°C at a cooling rate of 10 °C/min. Subsequently, the propylene polymer composition was held at 50°C for 3 minutes and then heated to 230°C at a heating rate of 10 °C/min to obtain a melting curve. After the melting curve obtained by measurement with a temperature $T_s$ of 173°C was determined to have a single melting peak, the same measurement was carried out at temperatures $T_s$ descending by 1°C. The temperature $T_s$ at which a new melting peak was observed on the higher temperature side than the single melting peak was defined as $T_a$ (unit: °C), and $T_{s,ideal}$ was obtained from the following formula.

$$T_{s,ideal} = T_a + 1$$

(4-2) Measurement of $T_m$ (unit: °C)

By using a differential scanning calorimeter (TA Instruments DSC250), 5 mg of the propylene polymer composition was held at 200°C for 3 minutes and then cooled to 50°C at a cooling rate of 10°C/min in a nitrogen atmosphere. Subsequently, the propylene polymer composition was held at 50°C for 3 minutes and then heated to $T_{s,ideal}$ at a heating rate of 10 °C/min. Subsequently, the propylene polymer composition was held at $T_{s,ideal}$ for 10 minutes and then cooled to 50°C at a cooling rate of 10 °C/min. Subsequently, the propylene polymer composition was held at 50°C for 3 minutes and then heated to a temperature lower than $T_{s,ideal}$ by 5°C at a heating rate of 10 °C/min. Subsequently, the propylene polymer composition was held at a temperature lower than $T_{s,ideal}$ by 5°C for 10 minutes and then cooled to 50°C at a cooling rate of 10 °C/min. Subsequently, the propylene polymer composition was held at 50°C for 3 minutes and then heated to a temperature lower than $T_{s,ideal}$ by 10°C at a heating rate of 10 °C/min. Subsequently, the propylene polymer composition was held at a temperature lower than $T_{s,ideal}$ by 10°C for 10 minutes and then cooled to 50°C at a cooling rate of 10 °C/min. Subsequently, the propylene polymer composition was held at 50°C for 3 minutes and then heated to a temperature lower than $T_{s,ideal}$ by 15°C at a heating rate of 10 °C/min. Subsequently, the propylene polymer composition was held at a temperature lower than $T_{s,ideal}$ by 15°C for 10 minutes and then cooled to 50°C at a cooling rate of 10 °C/min. Subsequently, the propylene polymer composition was held at 50°C for 3 minutes and then heated to a temperature lower than $T_{s,ideal}$ by 20°C at a heating rate of 10 °C/min. Subsequently, the propylene polymer composition was held at a temperature lower than $T_{s,ideal}$ by 20°C for 10 minutes and then cooled to 50°C at a cooling rate of 10 °C/min. Subsequently, the propylene polymer composition was held at 50°C for 3 minutes and then heated to a temperature lower than $T_{s,ideal}$ by 25°C at a heating rate of 10 °C/min. Subsequently, the propylene polymer composition was further held at a temperature lower than $T_{s,ideal}$ by 25°C for 10 minutes and then cooled to 50°C at a cooling rate of 10 °C/min. Subsequently, the propylene polymer composition was held at 50°C for 3 minutes and then heated to a temperature lower than $T_{s,ideal}$ by 30°C at a heating rate of 10 °C/min. Subsequently, the propylene polymer composition was held at a temperature lower than $T_{s,ideal}$ by 30°C for 10 minutes and then cooled to 50°C at a cooling rate of 10 °C/min. Subsequently, the propylene polymer composition was further held at 50°C for 3 minutes and then heated to a temperature lower than $T_{s,ideal}$ by 35°C at a heating rate of 10 °C/min. Subsequently, the propylene polymer composition was held at a temperature lower than $T_{s,ideal}$ by 35°C for 10 minutes and then cooled to 50°C at a cooling rate of 10 °C/min. Subsequently, the propylene polymer composition was held at 50°C for 3 minutes and then heated to a temperature lower than $T_{s,ideal}$ by 40°C at a heating rate of 10 °C/min. Subsequently, the propylene polymer composition was held at a temperature lower than $T_{s,ideal}$ by 40°C for 10 minutes and then cooled to 50°C at a cooling rate of 10 °C/min. Subsequently, the propylene polymer composition was held at 50°C for 3 minutes and then heated to a temperature lower than $T_{s,ideal}$ by 45°C at a heating rate of 10 °C/min. Subsequently, the propylene polymer composition was held at a temperature lower than $T_{s,ideal}$ by 45°C for 10 minutes and then cooled to 50°C at a cooling rate of 10 °C/min. Subsequently, the propylene polymer composition was held at 50°C for 3 minutes and then heated to a temperature lower than $T_{s,ideal}$ by 50°C at a heating rate of 10 °C/min. Subsequently, the propylene polymer composition was held at a temperature lower than $T_{s,ideal}$ by 50°C for 10 minutes and then cooled to 50°C at a cooling rate of 10 °C/min. Subsequently, the propylene polymer composition was held at 50°C for 3 minutes and then heated to 230°C at a heating rate of 10 °C/min to obtain a melting curve, and the temperature corresponding to the maximum endothermic peak was defined as $T_m$.

(4-3) Calculation of Lamella Thickness $L_c$ (unit: m)

The lamella thickness $L_c$ of the propylene polymer composition was determined from the following formula in accordance with the method proposed by J. Kang et al. (Polymer Bulletin, volume 71, page 563, 2014).

$$L_c = 2\sigma/(\Delta H_0 \times (1 - (T_m + 273)/T_m^0))$$

(wherein surface free energy $\sigma = 0.0496$ J/m$^2$, equilibrium enthalpy of melting $\Delta H_0 = 184 \times 10^6$ J/m$^3$, and equilibrium melting point $T_m^0 = 460$ K)

(4-4) Calculation of Maximum Meso-Chain Length (MSL, unit: none)

The MSL of the propylene polymer composition was determined from the following formula in accordance with the method proposed by J. Kang et al. (Polymer Bulletin, volume 71, page 563, 2014).

$$MSL = 3L_c/L_{helix}$$

(wherein crystal lattice length $L_{helix} = 0.65 \times 10^{-9}$ m)

(5) Film Thickness (unit: $\mu$m)

The thickness of the biaxially oriented film was measured with a contact-type film thickness meter in accordance with the method A described in JIS K7130-1999.

(6) Uniform Stretchability (Relative Standard Deviation, unit: %)

In a sequential biaxial stretching process, the propylene polymer composition was heat-melted in an extruder and extruded from a T-die onto a cooling roll to cool and solidify the extruded composition in a sheet shape and thus to form a non-oriented sheet. The obtained non-oriented sheet was stretched in the MD by using heated stretching rolls to form a uniaxially oriented film. By using a stamp having 10 reference lines at 9 mm intervals in the TD, the reference lines were stamped on the obtained uniaxially oriented film. Both ends of the uniaxially oriented film with the reference lines stamped thereon were held with two columns of chucks arranged in the MD, and the uniaxially oriented film was stretched in the TD in a heating furnace including a preheating unit, a stretching unit, and a heat treatment unit. Subsequently, the stretched film was relaxed in the TD by narrowing the distance between the two columns of chucks to produce a biaxially oriented film. The intervals between the reference lines in the TD on the resulting biaxially oriented film were read, and the relative standard deviation of the intervals between the reference lines was determined and defined as a measure of stretch processability. A smaller relative standard deviation indicates more uniform stretching and better stretch processability (uniform stretchability).

(7) Young's Modulus (unit: GPa)

A biaxially oriented film, 120 mm $\times$ 20 mm, was sampled such that the long side direction (120 mm) corresponded to the measurement direction (MD, TD). The biaxially oriented film was subjected to tensile testing at a grip distance of 60 mm and a tensile speed of 5 mm/min using Universal Testing Machine STB-1225 available from A&D Company, Limited in an atmosphere at 23°C and a humidity of 50%. The Young's modulus (MD, TD) was measured from the tangent at the zero point of the tension-stress curve.

(8) Heat Shrinkage (unit: %)

An A4-size (297 mm long $\times$ 210 mm wide) film was sampled from the biaxially oriented film such that the long axis was parallel to the MD, and a reference line of 200 mm was drawn on the film in each of the MD and the TD. The film was suspended in an oven at 150°C and held for 30 minutes. Subsequently, the film was taken out and cooled at room temperature for 30 minutes, and the length of each reference line was then measured. The heat shrinkage in each direction was calculated from the following calculation formula.

$$\text{Heat shrinkage (\%)} = \{(200 - \text{reference line length (mm) after heating})/200\} \times 100$$

A smaller heat shrinkage indicates better dimensional stability at high temperatures.

The components used in Examples and Comparative Examples are as described below.

<Propylene Polymer Intermediate Composition 1>

A propylene polymer 1 was prepared by polymerizing propylene in an environment with a hydrogen concentration of 0•95 mol% in accordance with the gas-phase polymerization method using a Ziegler-Natta catalyst, triethylaluminum serving as a promotor, and cyclohexylethyldimethoxysilane serving as an external donor. The obtained propylene polymer 1 (100 parts by mass) was mixed with 0.002 parts by mass of Caltech LT (neutralizer, available from Suzuki Industry Co., Ltd.) and 0.15 parts by mass of IRGANOX 1010 (antioxidant, available from BASF Japan Ltd.). The resulting mixture was then melt-kneaded to produce a propylene polymer intermediate composition 1 in a pellet form. The obtained propylene polymer intermediate composition 1 had an MFR of 9.5 g/10 min, a CXS of 0.4 mass%, a [mmmm] of 98.2%, and a maximum meso-chain length of 83.

<Propylene Polymer Intermediate Composition 2>

A propylene polymer 2 was prepared by polymerizing propylene in an environment with a hydrogen concentration of 2.25 mol% in accordance with the gas-phase polymerization method using a Ziegler-Natta catalyst, triethylaluminum serving as a promotor, and cyclohexylethyldimethoxysilane serving as an external donor. The obtained propylene polymer 2 (100 parts by mass) was mixed with 0.05 parts by mass of calcium stearate (neutralizer, available from Sakai Chemical Industry Co. Ltd.), 0.05 parts by mass of IRGANOX 1010 (antioxidant, available from BASF Japan Ltd.), and 0.05 parts by mass of IRGAFOS 168 (antioxidant, available from BASF Japan Ltd.). The resulting mixture was then melt-kneaded to produce a propylene polymer intermediate composition 2 in a pellet form. The propylene polymer intermediate composition 2 had an MFR of 19.5 g/10 min, a CXS of 0.7 mass%, a [mmmm] of 98.4%, and a maximum meso-chain length of 81.

<Propylene Polymer Intermediate Composition 3>

A propylene polymer 3 was prepared by polymerizing propylene in an environment with a hydrogen concentration of 0.14 mol% in accordance with the gas-phase polymerization method using a Ziegler-Natta catalyst, triethylaluminum serving as a promotor, and cyclohexylethyldimethoxysilane serving as an external donor. The obtained propylene polymer 3 (100 parts by mass) was mixed with 0.01 parts by mass of DHT-4C (neutralizer, available from Kyowa Chemical Industry Co., Ltd.), 0.09 parts by mass of IRGANOX 1010 (antioxidant, available from BASF Japan Ltd.), and 0.05 parts by mass of Sumilizer GP (antioxidant, available from Sumitomo Chemical Co., Ltd.). The resulting mixture was then melt-kneaded to produce a propylene polymer intermediate composition 3 in a pellet form. The obtained propylene polymer intermediate composition 3 had an MFR of 2.3 g/10 min, a CXS of 0.4 mass%, a [mmmm] of 98.2%, and a maximum meso-chain length of 84.

<Propylene Polymer Intermediate Composition 4>

A propylene polymer 4 was prepared by polymerizing propylene in an environment with a hydrogen concentration of 0.06 mol% in accordance with the gas-phase polymerization method using a Ziegler-Natta catalyst, triethylaluminum serving as a promotor, and n-propylmethyldimethoxysilane and cyclohexylethyldimethoxysilane serving as external donors. The obtained propylene polymer 4 (100 parts by mass) was mixed with 0.05 parts by mass of calcium stearate (neutralizer, available from Sakai Chemical Industry Co. Ltd.), 0.005 parts by mass of DHT-4C (neutralizer, available from Kyowa Chemical Industry Co., Ltd.), 0.15 parts by mass of IRGANOX 1010 (antioxidant, available from BASF Japan Ltd.), and 0.10 parts by mass of IRGAFOS 168 (antioxidant, available from BASF Japan Ltd.). The resulting mixture was then melt-kneaded to produce a propylene polymer composition 4 in a pellet form. The obtained propylene polymer composition 4 had an MFR of 2.2 g/10 min, a CXS of 2.9 mass%, a [mmmm] of 92.4%, and a maximum meso-chain length of 79.

<β-Crystal Nucleating Agent Masterbatch>

The propylene polymer 1 was prepared by polymerizing propylene under the same conditions as those for the propylene polymer intermediate composition 1. The obtained propylene polymer 1 (95 parts by mass) was mixed with 5 parts by mass of NU-100 (β-crystal nucleating agent, available from New Japan Chemical Co.,Ltd.), 0.01 parts by mass of DHT-4C (neutralizer, available from Kyowa Chemical Industry Co., Ltd.), 0.05 parts by mass of IRGANOX 1010 (antioxidant, available from BASF Japan Ltd.), and 0.10 parts by mass of Sumilizer GP (antioxidant, available from Sumitomo Chemical Co., Ltd.). The resulting mixture was then melt-kneaded to produce a β-crystal nucleating agent masterbatch in a pellet form.

<α-Crystal Nucleating Agent Masterbatch>

The propylene polymer 2 was prepared by polymerizing propylene under the same conditions as those for the propylene polymer intermediate composition 2. The obtained propylene polymer 2 (87 parts by mass) was mixed with 10 parts by mass of G-DXR (α-crystal nucleating agent, available from New Japan Chemical Co.,Ltd.) and 3 parts by mass of ADK-STAB PEP-36 (antioxidant, available from ADEKA Corporation), and next mixed with 0.05 parts by mass of calcium stearate (neutralizer, available from Sakai Chemical Industry Co. Ltd.), 0.05 parts by mass of Sumilizer GP (antioxidant, available from Sumitomo Chemical Co., Ltd.), and 0.05 parts by mass of IRGAFOS 168 (antioxidant, available from BASF Japan Ltd.), and 0.05 parts by mass of Caltech LT (neutralizer, available from Suzuki Industry Co., Ltd.). The resulting mixture was then melt-kneaded to produce an α-crystal nucleating agent masterbatch in a pellet form.

<Example 1>

The propylene polymer intermediate composition 1 (99 parts by mass) and the β-crystal nucleating agent masterbatch (1 part by mass) were mixed in a HENSCHEL mixer, and the resulting mixture was then melt-kneaded to produce a propylene polymer composition 11. The concentration of the β-crystal nucleating agent in the propylene polymer composition 11 was 500 ppm by mass. The pellets obtained by melt-kneading the propylene polymer composition 11 had an MFR of 8.3 g/10 min, a CXS of 0.8 mass%, and a [mmmm] of 98.1%.

The propylene polymer composition 11 was heat-melted at a resin temperature of 260°C in a T-die film making machine including an extruder with a screw diameter of φ 65 mm and extruded onto a 30°C cooling roll to form a non-oriented sheet. The obtained non-oriented sheet was stretched 5 times in the MD by using stretching rolls heated to 142°C to form a uniaxially oriented film. With both ends of the obtained uniaxially oriented film held with two columns of chucks arranged in the MD, the uniaxially oriented film was stretched 8 times in the TD by widening the distance between the two columns of chunks in the TD in a heating furnace heated to 170°C, and the stretched film was then relaxed 19.5% in the TD by narrowing the distance between the two columns of chunks in a heating furnace heated to 165°C to produce a biaxially oriented film. The production conditions and the measured values of the physical properties of the resulting biaxially oriented film are shown in Tables 1 to 3.

<Example 2>

The propylene polymer intermediate composition 1 (96 parts by mass) and the β-crystal nucleating agent masterbatch (4 parts by mass) were mixed in a HENSCHEL mixer to produce a propylene polymer composition 12.

The concentration of the β-crystal nucleating agent in the propylene polymer composition 12 was 2000 ppm by mass. The pellets obtained by melt-kneading the propylene polymer composition 12 had an MFR of 10.0 g/10 min, a CXS of 0.8 mass%, and a [mmmm] of 98.1%. The propylene polymer composition 12 was heat-melted at a resin temperature of 260°C in a T-die film making machine including an extruder with a screw diameter of φ 65 mm and extruded onto a 30°C cooling roll to form a non-oriented sheet. The obtained non-oriented sheet was stretched 5 times in the MD by using stretching rolls heated to 152°C to form a uniaxially oriented film. With both ends of the obtained uniaxially oriented film held with two columns of chucks arranged in the MD, the uniaxially oriented film was stretched 8 times in the TD by widening the distance between the two columns of chunks in the TD in a heating furnace heated to 170°C, and the stretched film was then relaxed 6.5% in the TD by narrowing the distance between the two columns of chunks in a heating furnace heated to 165°C to produce a biaxially oriented film. The production conditions and the measured values of the physical properties of the resulting biaxially oriented film are shown in Tables 1 to 3.

<Example 3>

The propylene polymer intermediate composition 2 (96 parts by mass) and the β-crystal nucleating agent masterbatch (4 parts by mass) were mixed in a HENSCHEL mixer to produce a propylene polymer composition 13.

The concentration of the β-crystal nucleating agent in the propylene polymer composition 13 was 2000 ppm by mass. The pellets obtained by melt-kneading the propylene polymer composition 13 had an MFR of 18.0 g/10 min, a CXS of 0.7 mass%, and a [mmmm] of 98.4%. The propylene polymer composition 13 was heat-melted at a resin temperature of 260°C in a T-die film making machine including an extruder with a screw diameter of φ 65 mm and extruded onto a 30°C cooling roll to form a non-oriented sheet. The obtained non-oriented sheet was stretched 5 times in the MD by using stretching rolls heated to 152°C to form a uniaxially oriented film. With both ends of the obtained uniaxially oriented film held with two columns of chucks arranged in the MD, the uniaxially oriented film was stretched 8 times in the TD by widening the distance between the two columns of chunks in the TD in a heating furnace heated to 170°C, and the stretched film was then relaxed 13.0% in the TD by narrowing the distance between the two columns of chunks in a heating furnace heated to 165°C to produce a biaxially oriented film. The production conditions and the measured values of the physical properties of the resulting biaxially oriented film are shown in Tables 1 to 3.

<Example 4>

A biaxially oriented film was produced in the same manner as in Example 3 except that a propylene polymer composition 14 was prepared such that the content of the propylene polymer intermediate composition 2 was changed from 96 parts by mass to 99 parts by mass, the β-crystal nucleating agent masterbatch was changed to the α-crystal nucleating agent masterbatch, and the content of the α-crystal nucleating agent masterbatch was changed from 4 parts by mass to 1 part by mass. The concentration of the α-crystal nucleating agent in the propylene polymer composition 14 was 1000 ppm by mass. The pellets obtained by melt-kneading the propylene polymer composition 14 had an MFR of 20.0 g/10 min, a CXS of 0.7 mass%, and a [mmmm] of 98.4%. The production conditions and the measured values of the physical properties of the resulting biaxially oriented film are shown in Tables 1 to 3.

<Comparative Example 1>

A biaxially oriented film was produced in the same manner as in Example 1 except that a propylene polymer composition C11 was prepared such that the propylene polymer intermediate composition 1 was changed to the propylene polymer intermediate composition 3. The concentration of the β-crystal nucleating agent in the propylene polymer composition C11 was 500 ppm by mass. The pellets obtained by melt-kneading the propylene polymer composition C11 had an MFR of 2.2 g/10 min, a CXS of 0.6 mass%, and a [mmmm] of 98.4%. The production conditions and the measured values of the physical properties of the resulting biaxially oriented film are shown in Tables 1 to 3.

<Comparative Example 2>

The propylene polymer intermediate composition 3 (99 parts by mass) and the α-crystal nucleating agent masterbatch (1 part by mass) were mixed in a HENSCHEL mixer, and the resulting mixture was melt-kneaded in an extruder to produce a propylene polymer composition C12. The concentration of the α-crystal nucleating agent in the propylene polymer composition C12 was 1000 ppm by mass. The pellets obtained by melt-kneading the propylene polymer composition C12 had an MFR of 2.2 g/10 min, a CXS of 0.6 mass%, and a [mmmm] of 98.3%. The propylene polymer composition C12 was heat-melted at a resin temperature of 260°C in a T-die film making machine including an extruder with a screw diameter of φ 65 mm and extruded onto a 30°C cooling roll to form a non-oriented sheet. The obtained non-oriented sheet was stretched 5 times in the MD by using stretching rolls heated to 152°C to form a uniaxially oriented film. With both ends of the obtained uniaxially oriented film held with two columns of chucks arranged in the MD, the uniaxially oriented film was stretched 8 times in the TD by widening the distance between the two columns of chunks in the TD in a heating furnace heated to 170°C, and the stretched film was then relaxed 19.5% in the TD by narrowing the distance between the two columns of chunks in a heating furnace heated to 165°C to produce a biaxially oriented film. The production conditions and the measured values of the physical properties of the resulting biaxially oriented film are shown in Tables 1 to 3.

<Comparative Example 3>

The propylene polymer intermediate composition 2 was heat-melted at a resin temperature of 260°C in a T-die film making machine including an extruder with a screw diameter of φ 65 mm and extruded onto a 30°C cooling roll to form a non-oriented sheet. The obtained non-oriented sheet was stretched 5 times in the MD by using stretching rolls heated to 152°C to form a uniaxially oriented film. With both ends of the obtained uniaxially oriented film held with two columns of chucks arranged in the MD, the uniaxially oriented film was stretched 8 times in the TD by widening the distance between the two columns of chunks in the TD in a heating furnace heated to 170°C, and the stretched film was then relaxed 19.5% in the TD by narrowing the distance between the two columns of chunks in a heating furnace heated to 165°C to produce a biaxially oriented film. The production conditions and the measured values of the physical properties of the resulting biaxially oriented film are shown in Tables 1 to 3.

<Comparative Example 4>

A biaxially oriented film was produced in the same manner as in Comparative Example 3 except that the propylene polymer intermediate composition 2 was changed to the propylene polymer intermediate composition 3. The production conditions and the measured values of the physical properties of the resulting biaxially oriented film are shown in Tables 1 to 3.

<Comparative Example 5>

A biaxially oriented film was produced in the same manner as in Example 1 except that a propylene polymer composition C13 containing 500 ppm by mass of the β-crystal nucleating agent was prepared such that the propylene polymer intermediate composition 1 was changed to the propylene polymer intermediate composition 4. The pellets obtained by melt-kneading the propylene polymer composition C13 had an MFR of 2.0 g/10 min, a CXS of 3.3 mass%, and a [mmmm] of 92.9%. The production conditions and the measured values of the physical properties of the resulting biaxially oriented film are shown in Tables 1 to 3.

Table 2 shows that the propylene polymer compositions in Examples have good uniform stretchability (small relative standard deviation) in TD stretching in the production of the biaxially oriented film, and the resulting biaxially oriented film has small heat shrinkage both in the MD and the TD.

[Table 1]

|  | Materials | MFR (g/10 min) | CXS (mass%) | [mmmm] (%) | Maximum Meso-Chain Length | Type of Crystal Nucleating Agent | Concentration of Crystal Nucleating Agent (ppm) |
|---|---|---|---|---|---|---|---|
| Example 1 | Propylene polymer composition 11 (propylene polymer composition 1 (99 mass%) + β-crystal nucleating agent masterbatch (1 mass%)) | 8.3 | 0. 8 | 98.1 | 83 | NU-100 | 500 |
| Example 2 | Propylene polymer composition 12 (propylene polymer composition 1 (96 mass%) + β-crystal nucleating agent masterbatch (4 mass%)) | 10.1 | 0.8 | 98.1 | 83 | NU-100 | 2000 |
| Example 3 | Propylene polymer composition 13 (propylene polymer composition 2 (96 mass%) + β-crystal nucleating agent masterbatch (4 mass%)) | 18.0 | 0.7 | 98.4 | 81 | NU-100 | 2000 |

(continued)

| | Materials | MFR (g/10 min) | CXS (mass%) | [mmmm] (%) | Maximum Meso-Chain Length | Type of Crystal Nucleating Agent | Concentration of Crystal Nucleating Agent (ppm) |
|---|---|---|---|---|---|---|---|
| Example 4 | Propylene polymer composition 14 (propylene polymer composition 2 (99 mass%) + α-crystal nucleating agent masterbatch (1 mass%)) | 20.3 | 0.7 | 98.4 | 81 | G-DXR | 1000 |

[Table 2]

| | Materials | MFR (g/10 min) | CXS (mass%) | [mmmm] (%) | Maximum Meso-Chain Length | Type of Crystal Nucleating Agent | Concentration of Crystal Nucleating Agent (ppm) |
|---|---|---|---|---|---|---|---|
| Comparative Example 1 | Propylene polymer composition C11 (propylene polymer composition 3 (99 mass%) + β-crystal nucleating agent masterbatch (1 mass%)) | 2.2 | 0.6 | 98.4 | 84 | NU-100 | 500 |
| Comparative Example 2 | Propylene polymer composition C12 (propylene polymer composition 3 (99 mass%) + α-crystal nucleating agent masterbatch (1 mass%)) | 2.2 | 0.6 | 98.3 | 84 | G-DXR | 1000 |
| Comparative Example 3 | Propylene polymer composition 2 (100 mass%) | 19.5 | 0.7 | 98.4 | 81 | - | 0 |
| Comparative Example 4 | Propylene polymer composition 3 (100 mass%) | 2.3 | 0.4 | 98.2 | 84 | - | 0 |

(continued)

| | Materials | MFR (g/10 min) | CXS (mass%) | [mmmm] (%) | Maximum Meso-Chain Length | Type of Crystal Nucleating Agent | Concentration of Crystal Nucleating Agent (ppm) |
|---|---|---|---|---|---|---|---|
| Comparative Example 5 | Propylene polymer composition C13 (propylene polymer composition 4 (99 mass%) + β-crystal nucleating agent masterbatch (1 mass%)) | 2.0 | 3.3 | 92.9 | 79 | NU-100 | 500 |

[Table 3]

| | Thickness (μm) | Relative Standard Deviation (%) | Young's Modulus (GPa) | | Heat Shrinkage (unit: %) | |
|---|---|---|---|---|---|---|
| | | TD | MD | TD | MD | TD |
| Example 1 | 20 | 4.7 | 2.8 | 4.9 | 2.5 | -0.7 |
| Example 2 | 19 | 7.5 | 2.3 | 4.3 | 1.5 | 1.2 |
| Example 3 | 21 | 7.7 | 2.2 | 4.1 | 1.4 | 0.1 |
| Example 4 | 17 | 10.8 | 3.0 | 5.3 | 2.1 | 1.0 |
| Comparative Example 1 | 21 | 7.9 | 2.9 | 4.9 | 4.2 | 1.0 |
| Comparative Example 2 | 20 | 6.3 | 2.6 | 4.7 | 3.8 | 2.8 |
| Comparative Example 3 | 19 | 27.2 | 2.3 | 4.9 | 1.9 | -0.8 |
| Comparative Example 4 | 21 | 5.8 | 2.5 | 5.1 | 4.4 | 2.8 |
| Comparative Example 5 | 21 | 2.5 | 2.3 | 3.8 | 6.9 | 5.2 |

INDUSTRIAL APPLICABILITY

The present invention can provide a propylene polymer composition that exhibits good uniform stretchability in the TD in the production of a biaxially oriented film and that may be processed into a biaxially oriented film having a relatively low heat shrinkage in the TD and the MD, a biaxially oriented film including the propylene polymer composition, and a packaging bag including the biaxially oriented film.

**Claims**

1.   A propylene polymer composition comprising:

a propylene polymer and a crystal nucleating agent,
wherein the propylene polymer composition has a melt flow rate of 5 g/10 min to 30 g/10 min as measured at a temperature of 230°C under a load of 21.18 N,
the propylene polymer composition has an isotactic pentad fraction of 90% or more, and
a concentration of the crystal nucleating agent is 50 ppm by mass to 5,000 ppm by mass.

2. The propylene polymer composition according to claim 1, wherein the isotactic pentad fraction is 97% or more.

3. The propylene polymer composition according to claim 1 or 2, wherein the melt flow rate is 6 g/10 min to 22 g/10 min.

4. The propylene polymer composition according to any one of claims 1 to 3, wherein the propylene polymer composition has a cold xylene-soluble fraction of 0.1 mass% to 1.0 mass%.

5. The propylene polymer composition according to any one of claims 1 to 4, wherein the propylene polymer composition has a maximum meso-chain length of 80 or more.

6. The propylene polymer composition according to any one of claims 1 to 5, wherein the propylene polymer composition satisfies formula (I) below:

$$9 \leq X/Y \leq 40 \qquad (I)$$

(wherein X represents a melt flow rate measured at a temperature of 230°C under a load of 21.18 N, and Y represents a cold xylene-soluble fraction).

7. The propylene polymer composition according to any one of claims 1 to 5, wherein the propylene polymer composition satisfies formula (II) below:

$$20 \leq X/Y \leq 30 \qquad (II)$$

(wherein X represents a melt flow rate measured at a temperature of 230°C under a load of 21.18 N, and Y represents a cold xylene-soluble fraction).

8. The propylene polymer composition according to any one of claims 1 to 7, wherein the concentration of the crystal nucleating agent is 100 ppm by mass to 2,500 ppm by mass.

9. The propylene polymer composition according to any one of claims 1 to 8, wherein the crystal nucleating agent is a β-crystal nucleating agent.

10. A biaxially oriented film comprising the propylene polymer composition according to any one of claims 1 to 9.

11. A packaging bag comprising the biaxially oriented film according to claim 10.

## INTERNATIONAL SEARCH REPORT

| International application No. |
| --- |
| **PCT/JP2021/031321** |

### A. CLASSIFICATION OF SUBJECT MATTER

**B29C 55/12**(2006.01)i; **B65D 65/00**(2006.01)i; **C08L 23/10**(2006.01)i
FI: C08L23/10; B65D65/00 A; B29C55/12

According to International Patent Classification (IPC) or to both national classification and IPC

### B. FIELDS SEARCHED

Minimum documentation searched (classification system followed by classification symbols)

B29C55/12; B65D65/00; C08L23/10

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2018-95699 A (SUNALLOMER LTD) 21 June 2018 (2018-06-21)<br>claims, example 3, paragraph [0021] | 1-11 |
| X | JP 2018-95698 A (FP CORP) 21 June 2018 (2018-06-21)<br>claims, example 1, paragraphs [0014], [0019] | 1-11 |
| X | JP 2012-117078 A (TORAY IND INC) 21 June 2012 (2012-06-21)<br>claims, examples, paragraph [0171] | 1-11 |
| X | JP 2012-7156 A (TORAY IND INC) 12 January 2012 (2012-01-12)<br>claims, examples | 1-11 |
| X | JP 2-135245 A (SUMITOMO KAGAKU KOGYO KK) 24 May 1990 (1990-05-24)<br>claims, example 4, p. 1, right column, line 9 | 1-3, 5, 8-11 |
| X | WO 2017/213125 A1 (SUMITOMO CHEMICAL CO) 14 December 2017 (2017-12-14)<br>claims, examples, comparative examples, tables 1, 2 | 1-8 |
| X | JP 2014-185297 A (SUMITOMO CHEMICAL CO) 02 October 2014 (2014-10-02)<br>claims, examples, comparative examples | 1-7, 9 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **30 September 2021** | **12 October 2021** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2021/031321**

| Patent document cited in search report | | | Publication date (day/month/year) | Patent family member(s) | | | Publication date (day/month/year) |
|---|---|---|---|---|---|---|---|
| JP | 2018-95699 | A | 21 June 2018 | (Family: none) | | | |
| JP | 2018-95698 | A | 21 June 2018 | CN | 108219295 | A | |
| | | | | claims, example 1 | | | |
| | | | | TW | 201835198 | A | |
| JP | 2012-117078 | A | 21 June 2012 | US | 2007/0178324 | A1 | |
| | | | | claims, examples | | | |
| | | | | WO | 2005/103127 | A1 | |
| | | | | EP | 1757653 | A1 | |
| | | | | CN | 1972986 | A | |
| | | | | KR | 10-2007-0004864 | A | |
| JP | 2012-7156 | A | 12 January 2012 | (Family: none) | | | |
| JP | 2-135245 | A | 24 May 1990 | US | 5032645 | A | |
| | | | | claims, example 4 | | | |
| | | | | EP | 369658 | A2 | |
| | | | | SG | 47424 | A | |
| WO | 2017/213125 | A1 | 14 December 2017 | US | 2019/0264015 | A1 | |
| | | | | claims, examples, comparative examples, tables 1, 2 | | | |
| | | | | EP | 3467022 | A1 | |
| | | | | CN | 109312125 | A | |
| JP | 2014-185297 | A | 02 October 2014 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2015012324 A
- JP 8291236 A
- JP 61218606 A
- JP 61287904 A
- JP 7216017 A
- JP 2004182876 A

### Non-patent literature cited in the description

- **A. ZAMBELLI et al.** *Macromolecules,* 1975, vol. 8, 687
- **A. J. MULLER et al.** SSA method. *European Polymer Journal,* 2015, vol. 65, 132
- **J. KANG et al.** *Polymer Bulletin,* 2014, vol. 71, 563